# DEMANDE DE BREVET EUROPEEN

(11) **EP 2 363 585 A1**
(43) Date de publication de la demande: **07.09.2011**
(21) Numéro de dépôt: 11167321.6
(22) Date de dépôt: 11.12.2007
(51) Int. Cl.: F02B 37/013, F02B 37/18, F02M 25/07, F01L 3/20

(54) **Moteur à combustion interne suralimenté**

(30) Priorité: 11.12.2006 FR 0610774
(62) Demande divisionnaire de: 07871832.7
(71) Demandeur: Melchior, Jean Frédéric, 75006 Paris (FR)
(72) Inventeur: Melchior, Jean Frédéric, 75006 Paris (FR)
(74) Mandataire: Ramey, Daniel

(57) **Abrégé**

Moteur à combustion interne suralimenté à turbocompresseur, dont les cylindres comprennent des orifices d'échappement équipés de soupapes d'échappement (30), dont les têtes (72) sont, en position de fermeture des orifices d'échappement, encastrées dans la culasse (74) du moteur pour être accélérées avant l'ouverture effective des orifices d'échappement.

## Description

L'invention concerne un moteur à combustion interne à quatre temps suralimenté à turbocompresseur, en particulier pour véhicule automobile, ce moteur à pistons alternatifs comprenant un collecteur d'admission alimenté en air sous pression par un compresseur entraîné par une turbine elle-même alimentée par une fraction au moins des gaz d'échappement du moteur, une autre fraction de ces gaz d'échappement pouvant être recyclée dans le collecteur d'admission pour réduire les émissions d'oxydes d'azote NOx.

L'invention concerne, plus particulièrement, un moteur du type précité à deux étages de turbocompression, comprenant un compresseur basse-pression et un compresseur haute-pression montés en série pour alimenter le moteur en air comprimé, et entraînés respectivement par une turbine haute-pression et par une turbine basse-pression, qui sont montées en série et alimentées par les gaz d'échappement du moteur.

Dans un tel moteur, la turbine haute-pression est dimensionnée pour les faibles vitesses de rotation du moteur, afin d'améliorer la turbocompression à ces vitesses. Un conduit de dérivation équipé d'une vanne réglable est branché entre l'entrée et la sortie de la turbine haute-pression et permet, pour les vitesses de rotation plus élevées du moteur, de décharger un débit excédentaire de gaz d'échappement directement à l'entrée de la turbine basse pression, qui est dimensionnée plus largement.

Toutefois, cette décharge de gaz d'échappement à l'entrée de la turbine basse pression augmente la pression entre les turbines et diminue le taux de détente et le débit de la turbine haute-pression. Cela augmente également le taux de détente de la turbine basse pression. Au-delà d'un certain taux de dérivation des gaz d'échappement, la puissance fournie par la turbine haute-pression n'est plus suffisante pour entraîner le compresseur associé à cette turbine.

La présente invention a notamment pour but d'éviter cet inconvénient de la technique antérieure.

Elle a également pour but de réduire la pression des gaz en aval du moteur pendant les phases d'échappement pour améliorer le rendement des moteurs à quatre temps.

Elle a encore pour but d'augmenter le taux de gaz d'échappement recyclés ou de diminuer la richesse de la combustion dans le moteur.

Elle concerne un moteur à combustion interne suralimenté à turbocompresseur, comprenant un collecteur d'échappement dont une sortie est reliée à l'entrée d'une turbine entraînant un compresseur d'alimentation du moteur en air sous pression, le collecteur d'échappement comprenant au moins une seconde sortie équipée de moyens d'obturation actionnés en synchronisme avec la rotation du vilebrequin du moteur pour fermer cette seconde sortie lors de l'ouverture des orifices d'échappement des cylindres du moteur et pour l'ouvrir avant la fermeture desdits orifices d'échappement.

Ainsi, dans ce moteur, une partie initiale de la masse de gaz émise par chaque cylindre alimente à haute pression la turbine pendant une première fraction de la période de vidange du cylindre, et le reste de cette masse de gaz est partagé à basse pression entre la turbine et la seconde sortie du collecteur d'échappement.

Avantageusement, la seconde sortie du collecteur d'échappement est reliée au collecteur d'admission du moteur par un conduit de recyclage de gaz d'échappement.

Selon une autre caractéristique, le collecteur d'échappement comprend une troisième sortie reliée à la sortie de la turbine précitée par un conduit de dérivation équipé d'une soupape de régulation de débit.

La sortie de ce conduit de dérivation peut alimenter une turbine basse-pression qui entraîne un compresseur basse-pression monté en série avec le compresseur précité qui est un compresseur haute-pression, la turbine basse pression étant alimentée en gaz d'échappement par la turbine précitée (qui est une turbine haute-pression) et par la vanne de régulation du conduit de dérivation.

On peut ainsi maintenir une forte contre-pression en aval du moteur quand les pistons sont au voisinage de leur point mort bas et ramener cette contre-pression à un niveau voisin de la pression d'admission pendant les courses de refoulement des pistons. Cela permet d'alimenter la turbine haute-pression à une pression supérieure à la pression d'admission sans créer de fortes pertes de rendement par pompage pendant les transvasements de gaz.

Selon une autre caractéristique, l'ouverture du second orifice de sortie du collecteur d'échappement par les moyens d'obturation précités a lieu à 60° environ de rotation du vilebrequin après l'ouverture des orifices d'échappement, et la durée de la fermeture de ce second orifice est avantageusement réglable.

Dans ces conditions, une partie initiale de la masse de gaz émise par chaque cylindre alimente à haute pression la turbine haute-pression et la soupape de régulation du conduit de dérivation relié à la turbine basse-pression pendant le premier tiers de la vidange du cylindre et le reste de cette masse de gaz alimente à basse pression, en parallèle, à la fois la turbine haute-pression, le conduit de recyclage de gaz d'échappement et le conduit de dérivation relié à la turbine basse-pression, pendant le reste de la période de vidange du cylindre.

Comme un seul cylindre peut être vidangé par demi-tour du vilebrequin, l'invention est limitée à quatre cylindres par turbine pour un moteur à quatre temps.

Le volume du conduit de recyclage doit être suffisant pour accueillir la bouffée de gaz qui suit sa mise en communication avec le collecteur d'échappement et en renvoyer une partie vers les turbines en fin d'évacuation du cylindre.

Les moyens d'obturation de la seconde sortie du collecteur d'échappement peuvent comprendre un boisseau ou un disque rotatif entraîné à une vitesse de rotation double de celle du vilebrequin du moteur (dans le cas d'un moteur à quatre cylindres et à quatre temps), ce qui permet une fermeture et une ouverture très rapides de cette seconde sortie, ou de préférence une ou plusieurs soupapes actionnées par des cames à quatre lobes (dans le cas d'un moteur à 4 cylindres et à 4 temps) de l'arbre à cames commandant les soupapes d'échappement des cylindres reliés au collecteur d'échappement.

Pour augmenter la vitesse d'ouverture des orifices d'échappement, l'invention est caractérisée en ce que les têtes des soupapes d'échappement sont encastrées dans la culasse du moteur dans leur position de fermeture des orifices d'échappement, ce qui permet d'accélérer les soupapes avant l'ouverture effective des orifices d'échappement.

Pour assurer un transfert rapide de la détente des gaz d'échappement entre les orifices d'échappement et la section critique de la turbine haute-pression, il est avantageux que le volume du collecteur d'échappement soit petit par rapport à la cylindrée unitaire et par exemple inférieur à 30% du volume d'un cylindre du moteur.

Pour réduire à un minimum la pression en aval du moteur pendant le recyclage des gaz d'échappement vers le collecteur d'admission, ce qui permet d'optimiser le rendement du moteur, il est avantageux que le conduit de recyclage des gaz d'échappement soit largement dimensionné et comprenne une vanne de réglage pour réduire le taux de gaz recyclés. Cette vanne doit être placée à l'entrée du conduit de recyclage afin de réduire à un minimum le volume en amont des turbines quand elle est fermée.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un moteur à quatre cylindres suralimenté selon l'invention ;
- la figure 2 est une vue schématique partielle en coupe d'une soupape d'échappement dans ses deux positions extrêmes de fermeture et d'ouverture ;
- la figure 3 représente les diagrammes d'ouverture de la soupape de la figure 2 et d'une soupape classique.

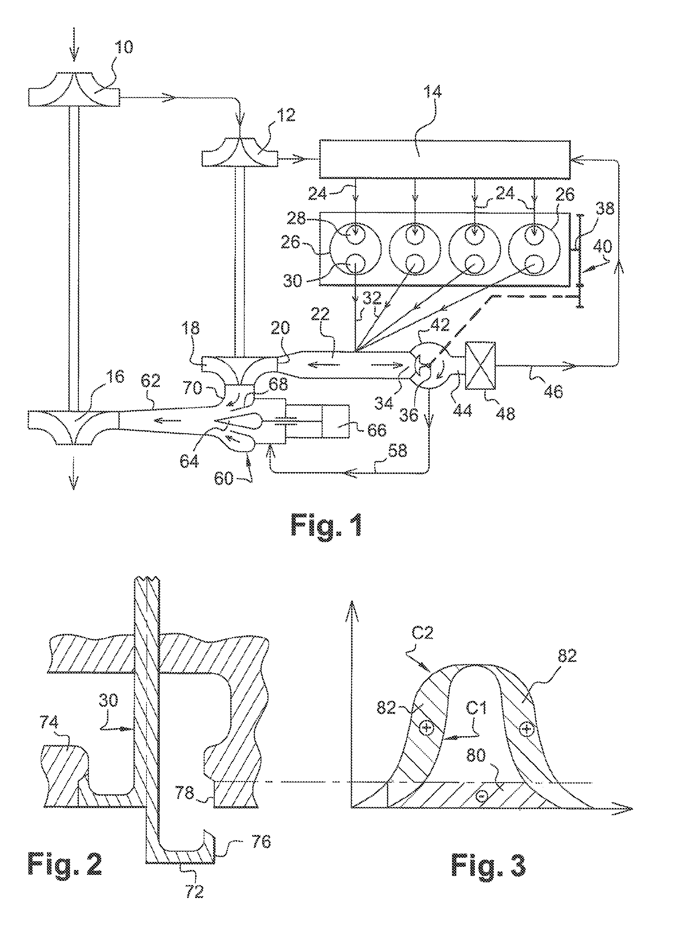

Le moteur représenté schématiquement en figure 1 est un moteur Diesel à quatre cylindres fonctionnant selon un cycle à quatre temps essentiellement sur une plage de vitesses de rotation comprises entre 1000 et 4000 tours par minute environ, ce moteur étant suralimenté par une turbocompression à deux étages au moyen d'un compresseur basse pression 10 monté en série avec un compresseur haute-pression 12 pour alimenter en air un collecteur d'admission 14 du moteur, le compresseur basse-pression 10 étant entraîné en rotation par une turbine basse-pression 16 montée en série avec une turbine haute-pression 18 qui entraîne en rotation le compresseur haute-pression 12 et qui est alimentée en gaz d'échappement par une première sortie 20 d'un collecteur d'échappement 22.

Les compresseurs 10 et 12 sont par exemple des compresseurs centrifuges et les turbines 16 et 18 sont des turbines radiales à géométrie fixe.

Le collecteur d'admission 14 est relié par des conduits 24 à des orifices d'admission des cylindres 26 du moteur, ces orifices étant équipés de soupapes d'admission 28 commandées par un arbre à cames, et les orifices d'échappement des cylindres 26, équipés de soupapes d'échappement 30 commandées par un autre arbre à cames, sont reliés par des conduits 32 au collecteur d'échappement 22.

Ce collecteur comporte une seconde sortie 34, par exemple située à une extrémité du collecteur 22 opposée à l'extrémité comportant la première sortie 20, et qui est sélectivement fermée par un obturateur rotatif 36 entraîné par le vilebrequin 38 du moteur à une vitesse double de la vitesse de rotation du moteur, par exemple par une transmission à engrenages 40.

L'obturateur rotatif 36 tourne dans une chambre cylindrique 42 dans laquelle débouchent, d'une part, la seconde sortie 34 du collecteur d'échappement 22 et, d'autre part, l'entrée 44 d'un conduit 46 de recyclage de gaz d'échappement dont la sortie débouche dans le collecteur d'admission 14.

En variante, la seconde sortie 34 du collecteur 22 peut être équipée d'une ou de plusieurs soupapes d'ouverture et de fermeture commandées par l'arbre à cames des soupapes d'échappement 30, comme on le verra plus en détail en référence aux figures 5 à 7.

L'entrée 44 du conduit de recyclage 46 comporte une vanne de réglage de débit 48 pilotée par le système de commande du moteur.

Le collecteur d'échappement 22 comprend une troisième sortie 50 reliée par un conduit de dérivation 58 à un éjecteur 60 à alimentation réglable, monté dans le conduit 62 qui relie la sortie de la turbine haute-pression 18 à la volute d'entrée de la turbine basse pression 16.

Cet éjecteur est avantageusement du type décrit dans la demande de brevet français 2 891 011-A1 du demandeur et comprend un obturateur axial 64 de forme conique déplaçable, par un actionneur 66 piloté par le système de commande du moteur, dans un convergent conique 68 se rétrécissant vers l'aval. Ce convergent débouche axialement dans une tuyère 70 de forme convergente formée dans le conduit 62 à la sortie de la turbine haute-pression 18.

Le moteur qui vient d'être décrit fonctionne de la façon suivante :
L'air fourni par les compresseurs 10 et 12 est à une pression d'environ 4,5 bars, la température d'admission de l'air dans le moteur est d'environ 300°K, la température d'échappement étant d'environ 900°K et la pression totale dans les cylindres avant l'ouverture des soupapes d'échappement étant dans ces conditions égale à trois fois la pression d'admission. La pression dans le collecteur d'échappement doit être au moins égale à la pression d'admission pour assurer le recyclage d'une partie des gaz d'échappement vers le collecteur d'admission.

Pour une détente efficace de la charge gazeuse présente dans les cylindres à l'ouverture des soupapes d'échappement 30, la seconde sortie 34 du collecteur d'échappement 22 est fermée par l'obturateur 36 pendant une durée qui correspond à environ 60° de rotation du vilebrequin 38 à partir de l'ouverture des orifices d'échappement de chaque cylindre, c'est-à-dire un peu avant le point mort bas de chaque piston.

Cela permet d'envoyer à l'entrée de la turbine haute-pression 18 et à l'entrée de l'éjecteur 60 la première partie la plus comprimée de la charge gazeuse à quitter le cylindre, pendant le premier tiers environ de la période de vidange du cylindre.

Pour assurer un transfert rapide de la détente de cette charge depuis les orifices d'échappement jusqu'à la section critique de la turbine haute-pression 18, le volume du collecteur d'échappement 22, délimité par les soupapes d'échappement 30, l'entrée de la turbine haute-pression 18, la seconde sortie 34 du collecteur d'échappement, et l'éjecteur 60 a une valeur minimale juste suffisante pour une évacuation correcte de chaque cylindre, cette valeur étant sensiblement égale à 30% du volume d'un cylindre.

Le transfert de la détente des gaz d'échappement vers l'entrée de la turbine haute-pression 18 est d'autant plus rapide que la section débitante de cette turbine est faible vis-à-vis de celle des orifices d'échappement du cylindre à la pleine ouverture (elle est par exemple inférieure à 1/3 environ de la section des orifices d'échappement d'un cylindre à pleine ouverture).

Quant l'obturateur 36 ouvre la seconde sortie 34 du collecteur d'échappement, la partie finale de la charge gazeuse contenue dans le cylindre en cours de vidange alimente, à basse pression, à la fois la turbine haute-pression 18, le conduit 46 de recyclage de gaz d'échappement et l'éjecteur 60, pendant une durée correspondant approximativement aux deux derniers tiers de la période de vidange du cylindre.

Cela permet de maintenir une contre-pression élevée en aval du moteur quand les pistons sont au voisinage de leur point mort bas et de ramener cette contre-pression à un niveau voisin de la pression d'admission pendant les courses de refoulement des pistons. On peut ainsi alimenter la turbine haute-pression 18 et la turbine basse pression 16 à une pression supérieure à la pression d'admission sans créer de fortes pertes de rendement par pompage pendant les transvasements.

Pour accélérer la vitesse d'ouverture des orifices d'échappement des cylindres, les têtes 72 des soupapes d'échappement 30 sont, dans leur position de fermeture, encastrées dans la culasse 74 du moteur, comme représenté en figure 2.

Pour cela, on donne une certaine hauteur aux rebords périphériques 76 des têtes de soupapes et on forme dans les orifices d'échappement des chambrages 78 d'une hauteur correspondante, dans lesquels ces rebords 76 sont encastrés de façon étanche dans la position de fermeture de l'orifice d'échappement.

Cela permet d'accélérer la soupape d'échappement sur une première partie de sa course avant l'ouverture réelle de l'orifice d'échappement.

Il en résulte une réduction de section débitante de cet orifice, que l'on a schématisée par la zone hachurée 80 du diagramme de la figure 3, qui représente la variation de cette section débitante en fonction de la rotation du vilebrequin. Dans ce diagramme, la courbe C1 correspond à la variation de cette section pour une soupape à tête non encastrée dans la culasse, tandis que la courbe C2 représente la variation de cette section pour une soupape à tête encastrée selon l'invention, le déplacement de cette soupape commençant un peu plus tôt et se terminant un peu plus tard que celui de la soupape classique non encastrée.

Cela se traduit par des augmentations de section, représentées par les zones hachurées 82, qui compensent la réduction de section représentée par la zone hachurée 80.

## Revendications

1. Moteur à combustion interne à quatre temps suralimenté à turbocompresseur, les cylindres du moteur comprenant des orifices d'échappement équipés de soupapes d'échappement (30), **caractérisé en ce que**, en position de fermeture des orifices d'échappement, les têtes (72) des soupapes d'échappement sont encastrées dans la culasse (74) du moteur pour être accélérées avant l'ouverture effective des orifices d'échappement.

2. Moteur selon la revendication 1, **caractérisé en ce que** les orifices d'échappement comprennent des chambrages (78) dans lesquels les têtes des soupapes d'échappement sont encastrées de façon étanche en position de fermeture des orifices d'échappement.

3. Moteur selon la revendication 2, **caractérisé en ce que** les chambrages (78) ont une hauteur correspondant à celle des rebords périphériques (76) des têtes des soupapes.

4. Moteur selon l'une des revendications 1 à 3, **caractérisé en ce que** le déplacement d'une soupape d'échappement précitée commence plus tôt et se termine plus tard que celui d'une soupape non encastrée.
